(19)

Europäisches
Patentamt
European
Patent Office
Office européen
des brevets

(11)　**EP 3 395 587 B1**

(12)　**EUROPEAN PATENT SPECIFICATION**

(45) Date of publication and mention
of the grant of the patent:
**07.04.2021　Bulletin 2021/14**

(51) Int Cl.:
**B60C 1/00** *(2006.01)*　　**C08K 9/02** *(2006.01)*

(21) Application number: **18156081.4**

(22) Date of filing: **09.02.2018**

(54) **RUBBER COMPOSITION AND PNEUMATIC TIRE**

KAUTSCHUKZUSAMMENSETZUNG UND LUFTREIFEN

COMPOSITION DE CAOUTCHOUC ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:　**24.04.2017　JP 2017085316**

(43) Date of publication of application:
**31.10.2018　Bulletin 2018/44**

(73) Proprietor: **Sumitomo Rubber Industries Ltd.
Kobe-shi, Hyogo 651-0072 (JP)**

(72) Inventor: **KITAGO, Ryota
Kobe-shi, Hyogo 651-0072 (JP)**

(74) Representative: **TBK
Bavariaring 4-6
80336 München (DE)**

(56) References cited:
**JP-A- 2012 255 099　　US-A- 4 331 706
US-A1- 2007 072 959**

EP 3 395 587 B1

**Description**

TECHNICAL FIELD

The present invention relates to a rubber composition and a pneumatic tire.

BACKGROUND ART

In the preparation of rubber compositions, zinc oxide, which serves to catalyze vulcanization reactions, is usually added to promote vulcanization reactions (see, for example, Patent Literature 1). The incorporation of zinc oxide into a rubber composition is carried out by kneading solid rubber and zinc oxide using a Banbury mixer, open roll mill, kneader, or other kneading machines.

However, disadvantageously, this kneading method has difficulty in obtaining uniform dispersion of zinc oxide, and only part of the added zinc oxide can serve as catalyst. In order to overcome the problem, a large amount of zinc oxide is often added. However, such zinc oxide may act as fracture nuclei, thereby reducing abrasion resistance.

Moreover, finely divided zinc oxide is commercially available. However, since it easily aggregates due to the large specific surface area, it leaves large aggregates, even after kneading, and the aggregates may act as fracture nuclei, thereby reducing abrasion resistance.

CITATION LIST

PATENT LITERATURE

Patent Literature 1: JP 2009-079077 A

In US 2007/072959 A1, zinc oxide and/or zinc carbonate coated particles, methods of coating particles with zinc oxide and/or zinc carbonate, and various applications of such coated particles, including applications in rubber and other polymer materials, are described.

US 4 331 706 A describes a composite pigment and method for its manufacture which comprises a finely-divided inert pigment as a core which has deposited on its surface a non-photoconductive grade of zinc oxide. The composite pigment can be used in rubber compounding.

SUMMARY OF INVENTION

TECHNICAL PROBLEM

The present invention aims to provide a rubber composition having good abrasion resistance and a pneumatic tire formed from the rubber composition.

SOLUTION TO PROBLEM

The present invention relates to a rubber composition as defined in claim 1.

The rubber composition preferably contains 0.3 to 2.0 parts by mass of the particulate zinc carrier per 100 parts by mass of the rubber component.

The diene rubber is preferably at least one selected from styrene-butadiene rubber, polybutadiene rubber, or an isoprene-based rubber.

The rubber composition preferably contains sulfur and contains 30 to 200 parts by mass of the particulate zinc carrier per 100 parts by mass of the sulfur.

The diene rubber is preferably a diene rubber having a functional group interactive with a filler.

The rubber composition preferably contains 1 to 120 parts by mass of a silica having a nitrogen adsorption specific surface area of 40 to 400 $m^2$/g per 100 parts by mass of the rubber component.

The rubber composition preferably contains a resin.

The resin preferably has a softening point of -20 to 45°C.

The rubber composition preferably contains 3 to 120 parts by mass of a carbon black having a nitrogen adsorption specific surface area of 30 to 300 $m^2$/g per 100 parts by mass of the rubber component.

The rubber composition preferably contains 0.5 to 3.0 parts by mass of stearic acid per 100 parts by mass of the rubber component.

The rubber composition preferably contains a tin-modified polybutadiene rubber produced by polymerization using a lithium initiator and having a tin atom content of 50 to 3,000 ppm, a vinyl content of 5 to 50% by mass, and a molecular weight distribution (Mw/Mn) of 2.0 or less.

The rubber composition preferably contains an isoprene-based rubber and a high cis polybutadiene rubber having a cis content of 90% by mass or more.

The rubber composition is preferably a rubber composition for tires.

The present invention also relates to a pneumatic tire, including a tire component formed from the rubber composition.

The present invention also relates to a method for preparing the rubber composition, the method including kneading a rubber component, before being kneaded with sulfur, with a sulfur atom-containing vulcanization accelerator, and then kneading the resulting kneaded mixture with the sulfur.

The method for preparing the rubber composition preferably includes kneading the rubber component, before being kneaded with a filler, with the sulfur atom-containing vulcanization accelerator, and then kneading the resulting kneaded mixture with the filler at a kneading temperature of 120°C or higher.

The present invention also relates to a rubber vulcanizate as defined in claim 17, having a free sulfur content of 0.46% by mass or less and a zinc content of 0.08 to 0.60% by mass.

Preferably, the free sulfur content is 0.44% by mass or less, and the zinc content is 0.10 to 0.55% by mass, more preferably 0.12 to 0.50% by mass.

The rubber vulcanizate is preferably for use in tires.

ADVANTAGEOUS EFFECTS OF INVENTION

The first aspect of the present invention relates to a rubber composition as defined in claim 1 containing: a rubber component including a diene rubber; and a particulate zinc carrier which includes a silicate particle and finely divided zinc oxide or finely divided basic zinc carbonate supported on the surface of the silicate particle. Such a rubber composition does not easily allow the formation of fracture nuclei and thus has good abrasion resistance. Furthermore, it is possible to reduce cure time, thereby resulting in efficient production of the rubber composition and therefore a pneumatic tire formed therefrom.

The second aspect of the present invention relates to a rubber vulcanizate having a free sulfur content of 0.46% by mass or less and a zinc content of 0.08 to 0.60% by mass. Such a rubber vulcanizate has good abrasion resistance.

DESCRIPTION OF EMBODIMENTS

The rubber composition of the present invention is defined in claim 1.

The first aspect of the present invention provides good abrasion resistance presumably due to the following mechanism.

Zinc serves to promote vulcanization reactions involving diene rubbers, sulfur, and vulcanization accelerators. Further, the particulate zinc carrier has better dispersibility than zinc oxide and shows a higher cure-promoting effect than zinc oxide, thereby providing more uniform crosslink density during vulcanization. Thus, the free sulfur content in the rubber after the vulcanization reaction can be reduced so that good abrasion resistance can be obtained. Moreover, cure time can be reduced due to the high cure-promoting effect of the particulate zinc carrier.

A rubber vulcanizate obtained by vulcanization with sulfur contains free sulfur which is not chemically bound to rubber. The term "free sulfur" in the present invention means such free sulfur not chemically bound to rubber. The term "free sulfur content" means the amount of free sulfur in a rubber vulcanizate.

The free sulfur content is expected to indicate the degree of cure of the rubber. The rubber vulcanizate of the second aspect of the present invention has a free sulfur content that is less than or equal to a predetermined value, and a zinc content falling within a predetermined range to provide good abrasion resistance.

(First aspect of present invention)

Firstly, the first aspect of the present invention will be described.

The rubber composition of the present invention as defined in claim 1 incorporates a particulate zinc carrier that includes a silicate particle and finely divided zinc oxide or finely divided basic zinc carbonate supported on the surface of the silicate particle.

The particulate zinc carrier used in the present invention is obtained by allowing finely divided zinc oxide or finely divided basic zinc carbonate to be supported on the surface of a silicate particle. The surface of the silicate particle has affinity for finely divided zinc oxide and finely divided basic zinc carbonate and thus can uniformly support finely divided zinc oxide or finely divided basic zinc carbonate.

The amount of supported finely divided zinc oxide or finely divided basic zinc carbonate, calculated as metallic zinc, is preferably within a range of 6 to 75% by mass. The lower limit of the amount is more preferably 15% by mass or more, still more preferably 25% by mass or more, particularly preferably 35% by mass or more, while the upper limit is more preferably 65% by mass or less, still more preferably 55% by mass or less. When the amount is within the range indicated above, the effects of the present invention can be more suitably achieved.

The supported amount calculated as metallic zinc can be calculated by converting the amount of supported finely divided zinc oxide or finely divided basic zinc carbonate into metallic zinc to obtain a Zn equivalent mass, and using this value in the following equation:

```
Supported amount calculated as metallic zinc (% by mass) = [(Zn
equivalent mass)/(mass of particulate zinc carrier)] × 100.
```

The finely divided zinc oxide-supporting silicate particle (particulate zinc carrier) has a BET specific surface area within a range of 10 to 55 $m^2/g$, preferably 15 to 50 $m^2/g$, more preferably 20 to 45 $m^2/g$.

The finely divided basic zinc carbonate-supporting silicate particle (particulate zinc carrier) has a BET specific surface area within a range of 25 to 90 $m^2/g$, preferably 30 to 85 $m^2/g$, more preferably 35 to 80 $m^2/g$.

Finely divided basic zinc carbonate is finer than finely divided zinc oxide and can form a fine particle having a higher BET specific surface area. Therefore, the carrier with supported finely divided basic zinc carbonate has a higher BET specific surface area than the carrier with supported finely divided zinc oxide, as described above.

The BET specific surface area may be determined by a nitrogen adsorption method using a BET specific surface area meter. The BET specific surface area ($BET_{Zn}$) of the finely divided zinc oxide or finely divided basic zinc carbonate supported on the silicate particle can be calculated using the following equation:

$$BET_{Zn} = \{(BET_{Zn-Si} \times W_{Zn}) + W_{Si} (BET_{Zn-Si} - BET_{Si})\}/W_{Zn}$$

wherein $BET_{Zn-Si}$: the BET specific surface area of the particulate zinc carrier;
$BET_{Si}$: the BET specific surface area of the silicate particle;
$W_{Zn}$: the mass (%) of the zinc oxide or basic zinc carbonate in the particulate zinc carrier;
$W_{Si}$: the mass (%) of the silicate particle in the particulate zinc carrier.

The BET specific surface area ($BET_{Zn}$) of the finely divided zinc oxide or finely divided basic zinc carbonate supported on the surface of the silicate particle is, in the case of finely divided zinc oxide, within a range of preferably 15 to 100 $m^2/g$, more preferably 40 to 80 $m^2/g$; and in the case of finely divided basic zinc carbonate, it is preferably within a range of 15 to 100 $m^2/g$, more preferably 40 to 80 $m^2/g$.

The particulate zinc carrier having an excessively low BET specific surface area cannot produce a sufficient crosslink-promoting effect and may fail to sufficiently improve abrasion resistance and other properties. Also, the particulate zinc carrier having an excessively high BET specific surface area may contain non-supported free finely divided zinc oxide or finely divided basic zinc carbonate, which may form aggregated particles and prevent formation of a uniform crosslinked structure. Furthermore, since a relatively larger amount of zinc oxide or basic zinc carbonate is supported, smaller economic benefits may be obtained.

The silicate particle in the present invention is preferably an aluminum silicate mineral particle. Examples of silicate particles other than aluminum silicate mineral particles include talc, mica, feldspar, bentonite, magnesium silicate, silica, calcium silicate (wollastonite), and diatomite.

The aluminum silicate mineral particle used in the present invention may be, for example, at least one selected from kaolinite, halloysite, pyrophyllite, and sericite.

In the present invention, the aluminum silicate mineral particle is preferably an anhydrous aluminum silicate mineral particle. The anhydrous aluminum silicate mineral particle may be, for example, one produced by firing at least one selected from kaolinite, halloysite, pyrophyllite, and sericite. For example, it may be produced by firing the foregoing clay mineral consisting of fine particles, at least 80% of which have a particle size of 2 $\mu$m or less, at a firing temperature of 500 to 900°C.

The particulate zinc carrier in the present invention can be prepared, for example, by mixing an acidic aqueous solution of a zinc salt with an alkaline aqueous solution in the presence of a silicate particle to precipitate finely divided zinc oxide or finely divided basic zinc carbonate so that the finely divided zinc oxide or finely divided basic zinc carbonate is supported on the surface of the silicate particle.

The process of mixing an acidic aqueous solution of a zinc salt with an alkaline aqueous solution in the presence of a silicate particle to precipitate finely divided zinc oxide or finely divided basic zinc carbonate may be carried out specifically as follows.

(1) A silicate particle is dispersed in an acidic aqueous solution of a zinc salt, and an alkaline aqueous solution is added to the dispersion.

(2) A silicate particle is dispersed in an alkaline aqueous solution, and an acidic aqueous solution of a zinc salt is added to the dispersion.

(3) A silicate particle is dispersed in water, and an acidic aqueous solution of a zinc salt and an alkaline aqueous solution are simultaneously added to the dispersion.

The method (1) is particularly preferred among the methods (1) to (3).

The acidic aqueous solution of a zinc salt may be prepared, for example, by adding a zinc salt such as zinc oxide, zinc hydroxide, basic zinc carbonate, zinc sulfate, or zinc nitrate to an acidic aqueous solution. The zinc oxide may be any zinc oxide product used as an industrial material. The acidic aqueous solution may be an aqueous solution of an acid such as hydrochloric acid, sulfuric acid, nitric acid, or carbonic acid. The acidic aqueous solution of a zinc salt may also be prepared by adding a water-soluble zinc compound such as zinc chloride to an acidic aqueous solution.

The alkaline aqueous solution may be, for example, an aqueous solution of sodium hydroxide, potassium hydroxide, sodium carbonate, or the like. Usually, the alkaline aqueous solution containing sodium hydroxide, potassium hydroxide, or the like may be used to precipitate and support finely divided zinc oxide. The acidic aqueous solution containing carbonic acid or the alkaline aqueous solution containing sodium carbonate or the like may be used to precipitate and support finely divided basic zinc carbonate.

Moreover, the finely divided basic zinc carbonate-supporting silicate particle may be prepared by converting the supported finely divided zinc oxide to finely divided basic zinc carbonate, e.g. by treating a finely divided zinc oxide-supporting silicate particle prepared as above with an ammonium salt aqueous solution or by introducing carbonic acid gas into an aqueous suspension of the finely divided zinc oxide-supporting silicate particle for carbonation. These treatments may be used alone or in combination.

The ammonium salt aqueous solution may be an aqueous solution of ammonium hydroxide, ammonium hydrogen carbonate, ammonium carbonate, or the like. These may be used alone, or two or more of these may be used in combination.

By conducting the treatment with an ammonium salt aqueous solution to convert finely divided zinc oxide to finely divided basic zinc carbonate as described above, finer particles can be supported.

After finely divided zinc oxide or finely divided basic zinc carbonate is precipitated and supported on the surface of the aluminum silicate mineral particle, it is usually washed sufficiently with water, dehydrated/dried, and pulverized.

The particulate zinc carrier may be surface treated with at least one selected from organic acids, fatty acids, fatty acid metal salts, fatty acid esters, resin acids, metal resinate salts, resin acid esters, silicic acid, silicic acid salts (e.g. Na salt), and silane coupling agents. It may be configured so that the surface is entirely or partially covered with the agent. It is not always necessary to continuously cover the entire surface.

In the case where the particulate zinc carrier is in the form of aqueous slurry, the surface treatment may be carried out in a wet process using a surface treatment agent as it is or after it is dissolved in an appropriate solvent at an appropriate temperature. In the case where the particulate zinc carrier is in the form of powder, the surface treatment may be carried out in a dry process using a surface treatment agent as it is or after it is dissolved in an appropriate solvent at an appropriate temperature.

The particulate zinc carrier may be a product of, for example, Shiraishi Calcium Kaisha Ltd.

The amount of the particulate zinc carrier per 100 parts by mass of the rubber component is preferably 0.3 parts by mass or more, more preferably 0.5 parts by mass or more, still more preferably 0.6 parts by mass or more, particularly preferably 0.7 parts by mass or more. The amount of the particulate zinc carrier is preferably 2.0 parts by mass or less, more preferably 1.8 parts by mass or less, still more preferably 1.6 parts by mass or less. When the amount is within the range indicated above, the effects of the present invention can be more suitably achieved.

The rubber composition of the present invention preferably contains sulfur.

Examples of the sulfur include those used commonly in the rubber industry, such as powdered sulfur, precipitated sulfur, colloidal sulfur, insoluble sulfur, highly dispersible sulfur, and soluble sulfur. These may be used alone, or two or more of these may be used in combination.

The sulfur may be a product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of sulfur, if present, per 100 parts by mass of the rubber component is preferably 0.5 parts by mass or more, more preferably 0.8 parts by mass or more. The amount is also preferably 3.0 parts by mass or less, more preferably 2.5 parts by mass or less, still more preferably 2.0 parts by mass or less. When the amount is within the range indicated above, the effects of the present invention tend to be well achieved.

The amount of the particulate zinc carrier per 100 parts by mass of sulfur is preferably 30 parts by mass or more, more preferably 40 parts by mass or more, still more preferably 60 parts by mass or more. The amount of the particulate zinc carrier is preferably 200 parts by mass or less, more preferably 180 parts by mass or less, still more preferably 160 parts by mass or less. When the amount is within the range indicated above, the effects of the present invention can be more suitably achieved.

The rubber composition of the present invention may contain zinc oxide together with the particulate zinc carrier, but the amount of the zinc oxide should be as low as possible.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of zinc oxide, if present, is preferably 0.5 parts by mass or less, more preferably 0.1 parts by mass or less, still more preferably 0 parts by mass (i.e. absence), per 100 parts by mass of the rubber component.

In the present invention, the rubber component includes a diene rubber.

Examples of diene rubbers that may be used include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR) . These rubbers may be used alone, or two or more of these may be used in combination. In addition to the above rubbers, the rubber component may include other rubbers such as butyl rubbers and fluororubbers. These rubbers may be used alone, or two or more of these may be used in combination.

The rubber component in the present invention refers to rubber having a weight average molecular weight (Mw) of 200,000 or more, preferably 350,000 or more. The upper limit of the Mw is not particularly critical, but is preferably 1,500,000 or less, more preferably 1,000,000 or less.

Herein, the Mw and the number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

To more suitably achieve the effects of the present invention, the amount of the diene rubber based on 100% by mass of the rubber component is preferably 60% by mass or more, more preferably 80% by mass or more, still more preferably 90% by mass or more, particularly preferably 100% by mass.

The diene rubber is preferably an isoprene-based rubber, BR, and/or SBR.

The diene rubber may be an unmodified diene rubber or a modified diene rubber.

Any modified diene rubber having a functional group interactive with a filler such as silica may be used. For example, it may be a chain end-modified diene rubber obtained by modifying at least one chain end of a diene rubber with a compound (modifier) having the functional group (chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); or a chain end-modified diene rubber that has been modified (coupled) with a polyfunctional compound having two or more epoxy groups in the molecule so that a hydroxyl or epoxy group is introduced.

The functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. To more suitably achieve the effects of the present invention, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.

Examples of the isoprene-based rubber include natural rubber (NR), polyisoprene rubber (IR), refined NR, modified NR, and modified IR. The NR may be one commonly used in the tire industry such as SIR20, RSS#3, or TSR20. Non-limiting examples of the IR include those commonly used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These rubbers may be used alone, or two or more of these may be used in combination. Among these, NR is preferred.

Non-limiting examples of the BR include high cis BR having high cis content, such as BR1220 available from Zeon Corporation and BR130B and BR150B both available from Ube Industries, Ltd.; BR containing syndiotactic polybutadiene crystals such as VCR412 and VCR617 both available from Ube Industries, Ltd.; and BR synthesized using rare earth catalysts (rare earth-catalyzed BR). These rubbers may be used alone, or two or more of these may be used in combination. Among these, high cis BR having a cis content of 90% by mass or more is preferred in order to improve abrasion resistance.

In the present invention, the BR may suitably be a tin-modified polybutadiene rubber (tin-modified BR) produced by polymerization using a lithium initiator and having a tin atom content of 50 to 3,000 ppm, a vinyl content of 5 to 50% by mass, and a molecular weight distribution (Mw/Mn) of 2.0 or less, in order to more suitably achieve the effects of the present invention.

It is preferred that the tin-modified BR is produced by polymerizing 1,3-butadiene using a lithium initiator and subsequently adding a tin compound, and further it has a tin-carbon bond at the molecular end.

Examples of the lithium initiator include lithium compounds such as alkyllithiums, aryllithiums, allyllithiums, vinyllithiums, organotinlithiums, and organic nitrogen lithium compounds. The use of a lithium compound as an initiator allows for the production of a tin-modified BR having a high vinyl content and a low cis content.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltinstyrene. These compounds may be used alone, or two or more of these may be used in combination.

The tin-modified BR has a tin atom content of 50 ppm or more, preferably 60 ppm or more. The tin atom content is 3,000 ppm or less, preferably 2,500 ppm or less, still more preferably 250 ppm or less. When the content is within the range indicated above, the effects of the present invention can be more suitably achieved.

The tin-modified BR has a molecular weight distribution (Mw/Mn) of 2.0 or less, preferably 1.5 or less. The lower limit of the Mw/Mn is not particularly critical. When it is within the range indicated above, the effects of the present invention can be more suitably achieved.

The tin-modified BR has a vinyl content of 5% by mass or more, preferably 7% by mass or more. The vinyl content is 50% by mass or less, preferably 20% by mass or less. When the content is within the range indicated above, the effects of the present invention can be more suitably achieved.

The vinyl content may be measured by infrared absorption spectrometry.

The BR may be an unmodified BR or a modified BR. Examples of the modified BR include those into which functional groups as mentioned for the modified diene rubber are introduced.

The BR may be a product of, for example, Ube Industries, Ltd., JSR Corporation, Asahi Kasei Corporation, or Zeon Corporation.

Non-limiting examples of the SBR include emulsion-polymerized styrene-butadiene rubber (E-SBR) and solution-polymerized styrene-butadiene rubber (S-SBR) . These rubbers may be used alone, or two or more of these may be used in combination.

The SBR preferably has a styrene content of 5% by mass or more, more preferably 10% by mass or more, still more preferably 15% by mass or more. The styrene content is also preferably 60% by mass or less, more preferably 40% by mass or less, still more preferably 30% by mass or less. When the content is within the range indicated above, the effects of the present invention can be more suitably achieved.

Herein, the styrene content of the SBR is determined by $^1$H-NMR.

The SBR may be a product manufactured or sold by, for example, Sumitomo Chemical Co., Ltd., JSR Corporation, Asahi Kasei Corporation, or Zeon Corporation.

The SBR may be an unmodified SBR or a modified SBR. Examples of the modified SBR include those into which functional groups as mentioned for the modified diene rubber are introduced.

The amount of the isoprene-based rubber, if present, based on 100% by mass of the rubber component is preferably 10% by mass or more, more preferably 40% by mass or more, still more preferably 60% by mass or more. The amount of the isoprene-based rubber is also preferably 90% by mass or less, more preferably 85% by mass or less. When the amount is within the range indicated above, the effects of the present invention tend to be better achieved.

The amount of BR, if present, based on 100% by mass of the rubber component is preferably 5% by mass or more, more preferably 10% by mass or more. The amount of BR is also preferably 80% by mass or less, more preferably 60% by mass or less, still more preferably 40% by mass or less. When the amount is within the range indicated above, the effects of the present invention tend to be better achieved.

The amount of SBR, if present, based on 100% by mass of the rubber component is preferably 10% by mass or more, more preferably 20% by mass or more. The amount of SBR is also preferably 95% by mass or less, more preferably 90% by mass or less. When the amount is within the range indicated above, the effects of the present invention tend to be better achieved.

In the present invention, the diene rubber is preferably a combination of two or more diene rubbers. In this case, the effects of the present invention can be more suitably achieved.

In the present invention, for example, a combination of an isoprene-based rubber and tin-modified BR is preferably used. In this case, the amount of the isoprene-based rubber based on 100% by mass of the rubber component is preferably 60 to 90% by mass, and the amount of tin-modified BR based on 100% by mass of the rubber component is preferably 10 to 40% by mass. When the amounts are within the ranges indicated above, the effects of the present invention tend to be better achieved.

In the present invention, for example, a combination of an isoprene-based rubber and high cis BR is preferably used. In this case, the amount of the isoprene-based rubber based on 100% by mass of the rubber component is preferably 30 to 90% by mass, more preferably 60 to 90% by mass, and the amount of high cis BR based on 100% by mass of the rubber component is preferably 10 to 70% by mass, more preferably 10 to 40% by mass. When the amounts are within the ranges indicated above, the effects of the present invention tend to be better achieved.

In the present invention, for example, a combination of an isoprene-based rubber and E-SBR is preferably used. In this case, the amount of the isoprene-based rubber based on 100% by mass of the rubber component is preferably 60 to 90% by mass, and the amount of E-SBR based on 100% by mass of the rubber component is preferably 10 to 40% by mass. When the amounts are within the ranges indicated above, the effects of the present invention tend to be better achieved.

In the present invention, for example, a combination of modified SBR and high cis BR is preferably used. In this case, the amount of modified SBR based on 100% by mass of the rubber component is preferably 60 to 90% by mass, and the amount of high cis BR based on 100% by mass of the rubber component is preferably 10 to 40% by mass. When the amounts are within the ranges indicated above, the effects of the present invention tend to be better achieved.

The rubber composition of the present invention preferably contains a filler (reinforcing filler).

Non-limiting examples of the filler include silica, carbon black, calcium carbonate, talc, alumina, clay, aluminum hydroxide, aluminum oxide, and mica. Among these, silica or carbon black is preferred in order to more suitably achieve the effects of the present invention.

The amount of the filler per 100 parts by mass of the rubber component is preferably 15 parts by mass or more, more preferably 20 parts by mass or more, still more preferably 40 parts by mass or more. The amount of the filler is also preferably 250 parts by mass or less, preferably 200 parts by mass or less, more preferably 150 parts by mass or less, still more preferably 120 parts by mass or less, particularly preferably 80 parts by mass or less. When the amount is within the range indicated above, the effects of the present invention tend to be better achieved.

Examples of the silica include dry silica (anhydrous silica) and wet silica (hydrous silica). Wet silica is preferred because it contains a large number of silanol groups.

The silica preferably has a nitrogen adsorption specific surface area ($N_2$SA) of 40 $m^2$/g or more, more preferably 120 $m^2$/g or more, still more preferably 150 $m^2$/g or more. The $N_2$SA is preferably 400 $m^2$/g or less, more preferably 200 $m^2$/g or less, still more preferably 180 $m^2$/g or less. When the $N_2$SA is within the range indicated above, the effects of the present invention tend to be better achieved.

The nitrogen adsorption specific surface area of the silica is measured by the BET method in accordance with ASTM D3037-81.

The silica may be a product of, for example, Degussa, Rhodia, Tosoh Silica Corporation, Solvay Japan, or Tokuyama Corporation.

The amount of silica, if present, per 100 parts by mass of the rubber component is preferably 1 part by mass or more, more preferably 10 parts by mass or more, still more preferably 30 parts by mass or more, particularly preferably 50 parts by mass or more. When the amount is equal to or more than the lower limit, better wet grip performance, fuel economy, and abrasion resistance can be obtained. The amount of silica is also preferably 120 parts by mass or less, more preferably 100 parts by mass or less, still more preferably 80 parts by mass or less. When the amount is less than or equal to the upper limit, the silica can readily disperse uniformly in the rubber composition, thereby resulting in better wet grip performance, fuel economy, and abrasion resistance.

Non-limiting examples of the carbon black include those commonly used in the tire industry, such as GPF, FEF, HAF, ISAF, and SAF. These may be used alone, or two or more of these may be used in combination.

The carbon black preferably has a nitrogen adsorption specific surface area ($N_2$SA) of 30 $m^2$/g or more, more preferably 90 $m^2$/g or more, still more preferably 120 $m^2$/g or more. The $N_2$SA of the carbon black is also preferably 300 $m^2$/g or less, more preferably 250 $m^2$/g or less, still more preferably 200 $m^2$/g or less, particularly preferably 160 $m^2$/g or less. When the $N_2$SA is within the range indicated above, the effects of the present invention tend to be better achieved.

Herein, the $N_2$SA of the carbon black is measured in accordance with JIS K6217-2:2001.

The carbon black preferably has a dibutylphthalate (DBP) oil absorption of 60 mL/100 g or more, more preferably 80 mL/100 g or more. The DBP of the carbon black is also preferably 300 mL/100 g or less, more preferably 200 mL/100 g or less, still more preferably 150 mL/100 g or less. When the DBP is within the range indicated above, the effects of the present invention tend to be better achieved.

Herein, the DBP of the carbon black is measured in accordance with JIS K6217-4:2001.

The carbon black may be a product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of carbon black, if present, per 100 parts by mass of the rubber component is preferably 3 parts by mass or more, more preferably 5 parts by mass or more, still more preferably 20 parts by mass or more, particularly preferably 30 parts by mass or more. The amount of carbon black is also preferably 120 parts by mass or less, more preferably 80 parts by mass or less, still more preferably 60 parts by mass or less. When the amount is within the range indicated above, the effects of the present invention tend to be better achieved.

The rubber composition of the present invention preferably contains a silane coupling agent together with silica.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone, or two or more of these may be used in combination. Among these, sulfide or mercapto silane coupling agents are preferred in order to better achieve the effects of the present invention.

The silane coupling agent may be a product of, for example, Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of silica is preferably 3 parts by mass or more, more preferably 5 parts by mass or more. An amount of 3 parts by mass or more tends to allow the added silane coupling agent to produce its effect. The amount is also preferably 20 parts by mass or less, more preferably 10 parts by mass or less. An amount of 20 parts by mass or less tends to lead to an effect commensurate with the added amount, as well as good processability during kneading.

Preferably, a resin is used in the present invention. In this case, the effects of the present invention can be more suitably achieved.

The resin may be solid or liquid at room temperature (25 °C), but is preferably liquid in order to more suitably achieve the effects of the present invention.

The resin preferably has a softening point of -20°C or higher, more preferably -10°C or higher. The softening point is preferably 45°C or lower, more preferably 40°C or lower. When it is within the range indicated above, the effects of the present invention tend to be better achieved.

Herein, the softening point of the resin is determined as set forth in JIS K 6220-1:2001 with a ring and ball softening point measuring apparatus and is defined as the temperature at which the ball drops down.

Non-limiting examples of the resin include styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These resins may be used alone, or two or more of these may be used in combination. Among these, coumarone-indene resins are preferred in order to more suitably achieve the effects of the present invention.

Styrene resins refer to polymers produced from styrenic monomers as structural monomers, and examples include polymers produced by polymerizing a styrenic monomer as a main component (50% by mass or more). Specific examples include homopolymers produced by polymerizing a styrenic monomer (e.g. styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene) alone, copolymers produced by copolymerizing two or more styrenic monomers, and copolymers of styrenic monomers and additional monomers copolymerizable therewith.

Examples of the additional monomers include acrylonitriles such as acrylonitrile and methacrylonitrile, acryls, unsaturated carboxylic acids such as methacrylic acid, unsaturated carboxylic acid esters such as methyl acrylate and methyl methacrylate, dienes such as chloroprene, butadiene, and isoprene, and olefins such as 1-butene and 1-pentene; and α,β-unsaturated carboxylic acids and acid anhydrides thereof such as maleic anhydride.

In particular, α-methylstyrene resins (e.g. α-methylstyrene homopolymer, copolymers of α-methylstyrene and styrene) are preferred in view of the balance of the properties.

Coumarone-indene resins refer to resins that contain coumarone and indene as monomer components forming the skeleton (backbone) of the resins. Examples of monomer components which may be contained in the skeleton other than coumarone and indene include styrene, α-methylstyrene, methylindene, and vinyltoluene.

Examples of terpene resins include polyterpene, terpene phenol, and aromatic modified terpene resins.

Polyterpene resins refer to resins produced by polymerization of terpene compounds or hydrogenated products thereof. The term "terpene compound" refers to a hydrocarbon having a composition represented by $(C_5H_8)_n$ or an oxygen-containing derivative thereof, each of which has a terpene backbone and is classified as, for example, a monot-erpene $(C_{10}H_{16})$, sesquiterpene $(C_{15}H_{24})$, or diterpene $(C_{20}H_{32})$. Examples of the terpene compound include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins made from the aforementioned terpene compounds, such as α-pinene resin, β-pinene resin, limonene resin, dipentene resin, and β-pinene-limonene resin, and hydrogenated terpene resins produced by hydrogenation of these terpene resins.

Examples of the terpene phenol resins include resins produced by copolymerization of the aforementioned terpene compounds and phenolic compounds, and resins produced by hydrogenation of these resins. Specific examples include resins produced by condensation of the aforementioned terpene compounds, phenolic compounds, and formaldehyde. The phenolic compounds include, for example, phenol, bisphenol A, cresol, and xylenol.

Examples of the aromatic modified terpene resins include resins obtained by modifying terpene resins with aromatic compounds, and resins produced by hydrogenation of these resins . The aromatic compound may be any compound having an aromatic ring, such as phenol compounds, e.g. phenol, alkylphenols, alkoxyphenols, and unsaturated hydrocarbon group-containing phenols; naphthol compounds, e.g. naphthol, alkylnaphthols, alkoxynaphthols, and unsaturated hydrocarbon group-containing naphthols; styrene and styrene derivatives, e.g. alkylstyrenes, alkoxystyrenes, and unsaturated hydrocarbon group-containing styrenes; and coumarone and indene.

Examples of the p-t-butylphenol acetylene resins include resins produced by condensation of p-t-butylphenol and acetylene.

The acrylic resin is not particularly limited. It may suitably be a solvent-free acrylic resin because it contains little impurities and has a sharp molecular weight distribution.

The solvent-free acrylic resin may be a (meth)acrylic resin (polymer) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45, all of which are hereby incorporated by reference in their entirety) using no or minimal amounts of auxiliary raw materials such as a polymerization initiator, a chain transfer agent, and an organic solvent. In the present invention, the term "(meth)acrylic" means methacrylic and acrylic.

Preferably, the acrylic resin is substantially free of auxiliary raw materials such as a polymerization initiator, a chain transfer agent, and an organic solvent. The acrylic resin is also preferably one having a relatively narrow composition distribution or molecular weight distribution, produced by continuous polymerization.

As described above, the acrylic resin is preferably one which is substantially free of auxiliary raw materials such as a polymerization initiator, a chain transfer agent, and an organic solvent, namely which is of high purity. The acrylic resin preferably has a purity (resin content in the resin) of 95% by mass or more, more preferably 97% by mass or more.

Examples of the monomer component of the acrylic resin include (meth)acrylic acid and (meth)acrylic acid derivatives such as (meth)acrylic acid esters (e.g., alkyl esters, aryl esters, aralkyl esters), (meth)acrylamide, and (meth)acrylamide derivatives.

In addition to such (meth)acrylic acid or (meth)acrylic acid derivatives, aromatic vinyls such as styrene, $\alpha$-methylstyrene, vinyltoluene, vinylnaphthalene, divinylbenzene, trivinylbenzene, or divinylnaphthalene may be used as monomer components of the acrylic resin.

The acrylic resin may be formed only of the (meth) acrylic component or may further contain constituent components other than the (meth)acrylic component.

The acrylic resin may contain a hydroxyl group, a carboxyl group, a silanol group, or the like.

The resin (e.g. a styrene resin or coumarone-indene resin) may be a product of, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The amount of the resin, if present, per 100 parts by mass of the rubber component is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When the amount is within the range indicated above, the effects of the present invention can be more suitably achieved.

The rubber composition of the present invention preferably contains an oil.

The oil may be, for example, a process oil, vegetable fat or oil, or a mixture thereof. Examples of the process oil include paraffinic process oils, aromatic process oils, and naphthenic process oils. Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone, or two or more of these may be used in combination.

The oil may be a product of, for example, Idemitsu Kosan Co., Ltd., Sankyo Yuka Kogyo K.K., JX Nippon Oil & Energy Corporation, Olisoy, H&R, Hokoku Corporation, Showa Shell Sekiyu K.K., or Fuji Kosan Co., Ltd.

The amount of the oil, if present, per 100 parts by mass of the rubber component is preferably 1 part by mass or more, more preferably 5 parts by mass or more. The amount is also preferably 60 parts by mass or less, more preferably 20 parts by mass or less. The amount of the oil includes the oil contained in rubber (oil extended rubber).

The rubber composition of the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of stearic acid, if present, per 100 parts by mass of the rubber component is preferably 0.5 parts by mass or more, more preferably 1.0 part by mass or more. The amount is also preferably 5.0 parts by mass or less, more preferably 3.0 parts by mass or less, still more preferably 2.5 parts by mass or less. When the amount is within the range indicated above, the effects of the present invention tend to be well achieved.

The rubber composition of the present invention preferably contains a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; guanidine vulcanization accelerators such as diphenylguanidine, diorthotolylguanidine, and orthotolylbiguanidine; and caprolactam disulfide. These may be used alone, or two or more of these may be used in combination. Among these, sulfenamide vulcanization accelerators, guanidine vulcanization accelerators, and thiazole vulcanization accelerators are preferred because the effects of the present invention can be more suitably achieved.

The amount of the vulcanization accelerator, if present, per 100 parts by mass of the rubber component is preferably 1.0 part by mass or more, more preferably 2.0 parts by mass or more. The amount is also preferably 10 parts by mass or less, more preferably 7.0 parts by mass or less, still more preferably 5.0 parts by mass or less. When the amount is within the range indicated above, the effects of the present invention tend to be well achieved.

The rubber composition of the present invention preferably contains an antioxidant.

Examples of the antioxidant include: naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl) propionate]methane. These antioxidants may be used alone, or two or more of these may be used in combination. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred.

The antioxidant may be a product of, for example, Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 1 part by mass or more, more preferably 2 parts by mass or more. The amount is also preferably 10 parts by mass or less, more preferably 7 parts by mass or less.

The rubber composition of the present invention preferably contains a wax.

Non-limiting examples of the wax include petroleum waxes such as paraffin wax and microcrystalline wax; naturally-occurring waxes such as plant wax and animal wax; and synthetic waxes such as polymers of ethylene, propylene, or the like. These waxes may be used alone, or two or more of these may be used in combination.

The wax may be a product of, for example, Ouchi Shinko Chemical Industrial Co., Ltd., Nippon Seiro Co., Ltd., or Seiko Chemical Co., Ltd.

The amount of the wax, if present, per 100 parts by mass of the rubber component is preferably 0.5 parts by mass or more, more preferably 1 part by mass or more. The amount is also preferably 10 parts by mass or less, more preferably 7 parts by mass or less.

In addition to the above components, the rubber composition may contain additives commonly used in the tire industry, such as vulcanizing agents other than sulfur (e.g., organic crosslinking agents, organic peroxides).

The rubber composition of the present invention can be prepared by conventional methods. Specifically, it may be prepared, for example, by kneading the components using a kneading machine such as a Banbury mixer, kneader, or open roll mill, and then vulcanizing the kneaded mixture.

The kneading conditions when additives other than vulcanizing agents and vulcanization accelerators are added include a kneading temperature of usually 50 to 200°C, preferably 80 to 190°C and a kneading time of usually 30 seconds to 30 minutes, preferably one minute to 30 minutes. When a vulcanizing agent and/or a vulcanization accelerator are added, the kneading temperature is usually 100°C or lower, and preferably ranges from room temperature to 80°C. The rubber composition containing a vulcanizing agent and/or a vulcanization accelerator is usually vulcanized by, for example, press vulcanization. The vulcanization temperature is usually 120 to 200°C, preferably 140 to 180°C.

The particulate zinc carrier may be added and kneaded together with sulfur in the step of kneading the rubber component with sulfur or may be added and kneaded in a kneading step before the kneading with sulfur. To more suitably achieve the effects of the present invention, the particulate zinc carrier is preferably added and kneaded together with sulfur in the step of kneading the rubber component with sulfur.

(Second aspect of present invention)

Next, the second aspect of the present invention will be described.

The rubber vulcanizate of the second aspect of the present invention has a free sulfur content of 0.46% by mass or less and a zinc content of 0.08 to 0.60% by mass.

The rubber vulcanizate of the second aspect of the present invention has a free sulfur content that is less than or equal to a predetermined value, and a zinc content falling within a predetermined range to provide good abrasion resistance.

The free sulfur content in the rubber vulcanizate is 0.46% by mass or less, preferably 0.44% by mass or less, more preferably 0.43% by mass or less. The lower limit of the free sulfur content is not particularly critical, but is preferably 0.10% by mass or more, more preferably 0.15% by mass or more, still more preferably 0.20% by mass or more. When the content is within the range indicated above, the effects of the present invention can be more suitably achieved.

In the present invention, the free sulfur content in the rubber vulcanizate may be determined by subjecting a rubber sample to immersion extraction with tetrahydrofuran, and optionally diluting the extraction liquid with tetrahydrofuran, followed by quantitation by high performance liquid chromatography, as described later in EXAMPLES.

The zinc content in the rubber vulcanizate is 0.08 to 0.60% by mass, preferably 0.10 to 0.55% by mass, more preferably 0.12 to 0.50% by mass. When the content is within the range indicated above, the effects of the present invention can be more suitably achieved.

The zinc content may be determined by dry ashing the rubber vulcanizate through sulfuric acid digestion and subjecting the ash to alkali fusion using sodium carbonate, followed by inductively coupled plasma optical emission spectrometry.

The rubber vulcanizate for use in applications requiring fuel economy and grip performance, such as a tread rubber for passenger vehicle tires, preferably has a tan $\delta$ peak temperature (Tg) of -16°C or higher, more preferably -15°C or higher. A Tg of -16°C or higher tends to lead to good grip performance. The upper limit of the tan $\delta$ peak temperature (Tg) of the rubber vulcanizate is not particularly critical, but is preferably lower than -8°C, more preferably lower than -10°C. A Tg of lower than -8°C tends to lead to good fuel economy and good abrasion resistance.

The tan $\delta$ peak temperature (Tg) is determined as follows: A specimen of a predetermined size is prepared from the rubber vulcanizate, and a temperature dependence curve of tan $\delta$ of the specimen over the temperature range from -100 to 100°C is obtained using a viscoelastic spectrometer VES (Iwamoto Seisakusho Co., Ltd.) at an initial strain of 10%, a dynamic strain of 0.5%, a frequency of 10 Hz, an amplitude of $\pm$ 0.25%, and a rate of temperature increase of 2°C/min. The temperature corresponding to the maximum tan $\delta$ in the temperature dependence curve is taken as the tan $\delta$ peak temperature.

The rubber vulcanizate having the predetermined free sulfur content and zinc content is obtainable by vulcanizing the rubber composition of the first aspect of the present invention. Specifically, the rubber vulcanizate may be prepared by adding the particulate zinc carrier followed by vulcanization.

Since the particulate zinc carrier has a higher cure-promoting effect than zinc oxide, the free sulfur content in the rubber after the vulcanization reaction can be reduced. Furthermore, due to the higher cure-promoting effect than zinc oxide, a small amount of the particulate zinc carrier can be used to suitably promote a vulcanization reaction, and thus the zinc content can be reduced to the predetermined amount. An increase in the amount of the particulate zinc carrier may lead to a reduced free sulfur content and an increased zinc content; therefore, a person skilled in the art can obtain the rubber vulcanizate by appropriately adjusting the amount of the particulate zinc carrier incorporated. More specifically, the rubber vulcanizate may be produced according to the suitable embodiments described for the first aspect of the present invention.

The rubber composition of the present invention and the rubber vulcanizate of the present invention can be used for, for example, tires, footwear soles, industrial belts, packings, seismic isolators, or medical stoppers, preferably for tires.

The rubber composition of the present invention and the rubber vulcanizate of the present invention are suitable for treads (cap treads) although it may also be used in tire components other than the treads, such as sidewalls, base treads, undertreads, clinch apexes, beadapexes, breaker cushions, rubbers for carcass cord toppings, insulations, chafers, and innerliners, as well as side reinforcement layers of run-flat tires.

The pneumatic tire of the present invention can be formed from the rubber composition by conventional methods.

Specifically, the unvulcanized rubber composition containing the components is extruded into the shape of a tire component such as a tread, assembled with other tire components on a tire building machine in a usual manner to form an unvulcanized tire, which is then heated and pressurized in a vulcanizer to produce a tire. Thus, when the rubber composition of the first aspect of the present invention is used to produce a tire, the tire includes a tire component formed of the rubber vulcanizate of the present invention.

The pneumatic tire of the present invention can be suitably used as a tire for passenger vehicles, large passenger vehicles, large SUVs, heavy load vehicles such as trucks and buses, light trucks, or two-wheeled vehicles, or as a run-flat tire or racing tire, and especially as a tire for passenger vehicles.

As described earlier, the rubber composition of the present invention can be prepared by kneading a rubber component, before being kneaded with sulfur, with a sulfur atom-containing vulcanization accelerator, and then kneading the resulting kneaded mixture with the sulfur.

If a rubber component is kneaded with a sulfur atom-containing vulcanization accelerator and then with sulfur, the sulfur is added and mixed into the rubber component in which the sulfur atom-containing vulcanization accelerator is better dispersed, thereby resulting in more uniform crosslink density and therefore better abrasion resistance.

Moreover, the method for preparing the rubber composition of the present invention preferably includes kneading the rubber component, before being kneaded with a filler, with the sulfur atom-containing vulcanization accelerator, and then kneading the resulting kneaded mixture with the filler at a kneading temperature of 120°C or higher.

Thus, the method for preparing the rubber composition of the present invention preferably includes:

kneading a rubber component, before being kneaded with sulfur and a filler, with a sulfur atom-containing vulcanization accelerator, and then kneading the resulting kneaded mixture with the filler at a kneading temperature of 120°C or higher; and

kneading the kneaded mixture containing the filler with the sulfur.

Sulfur atom-containing vulcanization accelerators tend to adsorb onto fillers. If a rubber component is kneaded with a sulfur atom-containing vulcanization accelerator and the with a filler, the filler is kneaded with the rubber component in which the sulfur atom-containing vulcanization accelerator is better dispersed, which makes it possible to reduce the adsorption of the sulfur atom-containing vulcanization accelerator onto the filler. Thus, better dispersion of the sulfur atom-containing vulcanization accelerator in the rubber component can be better maintained even after the filler is added and kneaded. Furthermore, if sulfur is added to and kneaded with the kneaded mixture containing the filler, it is possible to add and knead the sulfur into the rubber component in which the sulfur atom-containing vulcanization accelerator is better dispersed, thereby resulting in more uniform crosslink density and therefore better abrasion resistance.

The particulate zinc carrier is preferably added and kneaded together with the filler. The particulate zinc carrier is also preferably added and kneaded together with the sulfur.

In the step of adding and kneading the filler at a kneading temperature of 120°C or higher, the kneading is preferably performed in the presence of a sulfur donor. The sulfur donor may be kneaded simultaneously during the kneading of the rubber component with the sulfur atom-containing vulcanization accelerator or may be added together with the filler.

Then, the sulfur donor releases active sulfur when the rubber component, sulfur donor, sulfur atom-containing vulcanization accelerator, and filler are kneaded at a kneading temperature of 120°C or higher. The active sulfur reacts with the sulfur atom-containing vulcanization accelerator and rubber component to bind the whole or a part (hereinafter referred to as "vulcanization accelerator residue") of the sulfur atom-containing vulcanization accelerator to the rubber component, or in other words to form a pendant structure in which the "-S-vulcanization accelerator residue" is bound to the rubber component. The mechanism of this reaction is presumably as follows: the released active sulfur reacts with the sulfur atom of the sulfur atom-containing vulcanization accelerator to form a structure having two or more sulfur atoms linked together, and the structure reacts with the double bond of the rubber component. If the kneading is performed in the presence of the pendant structure, the vulcanization accelerator residue moves with the rubber component, which makes it possible to improve the uniformity of the dispersion of the vulcanization accelerator residue in the rubber composition as a whole and thus to provide more uniform crosslink density during vulcanization, thereby resulting in better abrasion resistance.

The kneading temperature refers to the measured temperature of a kneaded mixture in a kneading machine and may be measured using, for example, a noncontact temperature sensor.

As described above, the production method is characterized in that: the kneading of the rubber component with the sulfur atom-containing vulcanization accelerator is started before kneading with the filler; and the addition of the filler is followed by kneading at a kneading temperature of 120°C or higher. As long as these conditions are satisfied, any material may be added in any step. In the case where the kneading process consists of two steps including Step X and Step F, for example, the kneading of the rubber component, sulfur donor, and sulfur atom-containing vulcanization accelerator may be started at an early stage of Step X, and the filler may be added and kneaded at a kneading temperature of 120°C or higher in the middle of Step X, followed by performing Step F. In the case where the kneading process consists of three steps including Step X, Step Y, and Step F, for example, the kneading of the rubber component, sulfur donor, and sulfur atom-containing vulcanization accelerator may be started in Step X, and then the filler may be added and kneaded at a kneading temperature of 120 °C or higher in Step Y, followed by performing Step F. In another example of the kneading process consisting of three steps, the kneading of the rubber component, sulfur donor, and sulfur atom-containing vulcanization accelerator may be started at an early stage of Step X, and the filler may be added and kneaded at a kneading temperature of 120°C or higher in the middle of Step X, followed by performing Step Y and Step F.

Alternatively, the kneading of the rubber component, sulfur donor, and sulfur atom-containing vulcanization accelerator may be started at an early stage of Step X, the filler may be added in the middle of Step X, and then the filler may be further added and kneaded at a kneading temperature of 120°C or higher in Step Y, followed by performing Step F. Remilling may be performed between the steps.

The temperature for kneading of the rubber component with the sulfur atom-containing vulcanization accelerator is not particularly limited. If the sulfur donor is kneaded together, the kneading temperature is preferably lower than 160°C, more preferably 150°C or lower, to suppress progress of the crosslinking reaction caused by the sulfur donor and sulfur atom-containing vulcanization accelerator. The lower limit is not particularly critical, but is preferably 60°C or higher.

The duration for kneading of the rubber component with the sulfur atom-containing vulcanization accelerator before adding the filler to the rubber component is not particularly limited. The duration is, for example, 10 seconds or longer to improve the dispersibility of the sulfur atom-containing vulcanization accelerator. The upper limit is not particularly critical, but is preferably eight minutes or shorter.

The temperature for kneading after adding the filler is any temperature that is equal to or higher than 120°C. It is preferably 170°C or lower to prevent excessive progress of the crosslinking reaction.

The duration for kneading after the kneading temperature reaches 120°C when the filler is added to the rubber component is not particularly limited. It is preferably two minutes or longer to improve the dispersibility of the sulfur donor and sulfur atom-containing vulcanization accelerator. The upper limit is not particularly critical, but is preferably 10 minutes or shorter. The duration for kneading refers to a time period from when the kneading temperature reaches 120°C after the filler is added to the rubber component to when all of the steps in the kneading process are completed. For example, in the case where the filler is added to the rubber component in Step X, the duration means a time period from when the kneading temperature reaches 120°C after the addition to when Step F (final kneading step) is completed.

The sulfur donor is elemental sulfur or a sulfur compound that can release active sulfur under vulcanization conditions (e.g., at 150°C, 1.5 Mpa) or at lower temperatures or pressures. In other words, it is a compound that functions generally as a vulcanizing agent under vulcanization conditions (e.g., at 150°C, 1.5 Mpa) or at lower temperatures or pressures. The released active sulfur forms a part of the pendant structure described above.

The sulfur donor may be elemental sulfur and/or a sulfur compound that can release active sulfur as described above. Examples of the elemental sulfur include powdered sulfur, precipitated sulfur, colloidal sulfur, surface-treated sulfur, and insoluble sulfur.

The use of an excessive amount of elemental sulfur as the sulfur donor may excessively promote the vulcanization reaction in the kneading process. Hence, when the rubber composition of the present invention contains elemental sulfur as the sulfur donor, the amount of elemental sulfur to be introduced before kneading the rubber component with the filler is preferably 0.1 parts by mass or less per 100 parts by mass of the rubber component (the total amount of the rubber component used in all steps). In view of tensile strength, the amount is also preferably 0.05 parts by mass or more.

Examples of the sulfur compound functioning as a sulfur donor include polymeric polysulfides represented by the formula: $-(-M-S-C-)_n-$, and compounds containing a structure with two or more singly bonded sulfur atoms: $-S_n-$ (n $\geq$ 2) which can release active sulfur. Examples of such compounds include alkylphenol disulfides, morpholine disulfides, thiuram vulcanization accelerators containing the $-S_n-$ (n$\geq$2) structure (e.g. tetramethylthiuram disulfide (TMTD), tetraethylthiuram disulfide (TETD), tetrabutylthiuram disulfide (TBTD), dipentamethylenethiuram tetrasulfide (DPTT)), 2-(4'-morpholinodithio)benzothiazole (MDB), and polysulfide silane coupling agents (e.g. Si69 (bis(3-triethoxysilylpropyl)tetrasulfide) available from Degussa). These compounds may be used alone, or two or more of these may be used in combination. Among these, thiuram vulcanization accelerators containing the $-S_n-$ (n $\geq$ 2) structure are preferred, with dipentamethylenethiuram tetrasulfide (DPTT) being more preferred.

When the rubber composition of the present invention contains a sulfur compound as the sulfur donor, the amount of the sulfur compound to be introduced before kneading the rubber component with the filler is preferably 0.1 parts by mass or more, more preferably 0.2 parts by mass or more, per 100 parts by mass of the rubber component (the total amount of the rubber component used in all steps) to promote the formation of the pendant structure. The amount is also preferably 5 parts by mass or less, more preferably 3 parts by mass or less, still more preferably 2 parts by mass or less, to suppress gelation during kneading.

The sulfur atom-containing vulcanization accelerator refers to a vulcanization accelerator that contains a sulfur atom bound to another molecule via a single bond. There are sulfur atom-containing vulcanization accelerators which release active sulfur and which do not. To suppress progress of the crosslinking reaction during kneading, the sulfur atom-containing vulcanization accelerator is preferably one that does not release active sulfur (non-sulfur-releasing sulfur atom-containing vulcanization accelerator).

Some sulfur atom-containing vulcanization accelerators function as sulfur donors (for example, vulcanization accelerators containing a sulfur atom bound to another molecule via a single bond). Thus, the pendant structure can also be formed by incorporating a large amount of a single sulfur atom-containing vulcanization accelerator functioning as a sulfur donor or by using a combination of two or more types of such vulcanization accelerators. However, the incorporation of a large amount of a sulfur atom-containing vulcanization accelerator functioning as a sulfur donor may excessively promote the crosslinking reaction during kneading, while the incorporation of a small amount thereof may be less likely to result in a uniform crosslinking density effect. Therefore, the sulfur donor and sulfur atom-containing vulcanization accelerator to be kneaded before adding the filler are preferably provided as a combination of a sulfur donor (a sulfur atom-containing vulcanization accelerator functioning as a sulfur donor, and/or other sulfur donors) and a non-sulfur-releasing sulfur atom-containing vulcanization accelerator (a sulfur atom-containing vulcanization accelerator which does not function as a sulfur donor).

The non-sulfur-releasing sulfur atom-containing vulcanization accelerator refers to, for example, a sulfur atom-containing vulcanization accelerator that does not release active sulfur under vulcanization conditions (e.g., at 150°C, 1.5 Mpa) or at lower temperatures or pressures. In other words, the non-sulfur-releasing sulfur atom-containing vulcanization accelerator is a sulfur atom-containing vulcanization accelerator that does not function as a vulcanizing agent under vulcanization conditions (e.g., at 150°C, 1.5 Mpa) or at lower temperatures or pressures.

Examples of the non-sulfur-releasing sulfur atom-containing vulcanization accelerator include those which contain no $-S_n-$ ($n \geq 2$) structure, such as thiazole vulcanization accelerators (e.g. 2-mercaptobenzothiazole (MBT), zinc salt of 2-mercaptobenzothiazole (ZnMBT), cyclohexylamine salt of 2-mercaptobenzothiazole (CMBT)), sulfenamide vulcanization accelerators (e.g. N-cyclohexyl-2-benzothiazolylsulfenamide (CBS), N-(tert-butyl)-2-benzothiazole sulfenamide (TBBS), N,N-dicyclohexyl-2-benzothiazolylsulfenamide), tetramethylthiuram monosulfide (TMTM), and dithiocarbamate vulcanization accelerators (e.g. piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc N-ethyl-N-phenyldithiocarbamate (ZnEPDC), zinc N-pentamethylenedithiocarbamate (ZnPDC), sodium dibutyldithiocarbamate (NaBDC), copper dimethyldithiocarbamate (CuMDC), iron dimethyldithiocarbamate (FeMDC), tellurium diethyldithiocarbamate (TeEDC)). One type of these may be used alone, or two or more types may be used in combination. Among these, sulfenamide vulcanization accelerators containing no $-S_n-$ ($n \geq 2$) structure are preferred, with N-(tert-butyl)-2-benzothiazole sulfenamide (TBBS) being more preferred. The thiazole vulcanization accelerator di-2-benzothiazolyl disulfide (MBTS) contains the $-S_n-$ ($n \geq 2$) structure and releases sulfur; however, this vulcanization accelerator, when used in a conventional amount, does not function as a vulcanization accelerator for natural rubber and polybutadiene rubber. Thus, it can be used as equivalent to the non-sulfur-releasing sulfur atom-containing vulcanization accelerator.

In the method for preparing the rubber composition of the present invention, the amount of the sulfur atom-containing vulcanization accelerator to be introduced before kneading the rubber component with the filler is preferably 1.0 part by mass or more, more preferably 1.5 parts by mass or more, per 100 parts by mass of the rubber component (the total amount of the rubber component used in all steps) to allow the vulcanization reaction to efficiently proceed during the vulcanization step. The amount is also preferably 5.0 parts by mass or less, more preferably 3.0 parts by mass or less, in view of scorch properties and inhibition of blooming to the surface.

The production method preferably includes kneading an additional sulfur donor (in particular, sulfur) in a step other than the steps performed before kneading the rubber component with the filler. The addition of an additional sulfur donor can prevent excessive progress of the crosslinking reaction during kneading while allowing the crosslinking reaction to sufficiently proceed during vulcanization.

The additional sulfur donor may be introduced, for example, at a later stage of Step X or in Step Y, in which the rubber component is kneaded with the filler at a kneading temperature of 120°C or higher, or in Step F performed after the rubber component is kneaded with the filler at a kneading temperature of 120°C or higher. The additional sulfur donor may be the same as or different from the sulfur donor mixed before adding the filler to the rubber component. For example, it is preferably elemental sulfur such as powdered sulfur, precipitated sulfur, colloidal sulfur, surface-treated sulfur, or insoluble sulfur.

In the rubber composition of the present invention, the amount of the additional sulfur donor per 100 parts by mass of the rubber component (the total amount of the rubber component used in all steps) is not particularly limited, but is preferably 0.5 parts by mass or more, more preferably 0.8 parts by mass or more, to allow the vulcanization reaction to efficiently proceed during the vulcanization step. The amount of the additional sulfur donor is also preferably 3.0 parts by mass or less, more preferably 2.5 parts by mass or less, still more preferably 2.0 parts by mass or less, to obtain excellent abrasion resistance.

The additional sulfur donor may be added with an additional vulcanization accelerator. Examples of the additional vulcanization accelerator include sulfur atom-containing vulcanization accelerators such as thiuram disulfides or polysulfides, and sulfur atom-free vulcanization accelerators such as guanidine vulcanization accelerators, aldehyde-amine vulcanization accelerators, aldehyde-ammonia vulcanization accelerators, and imidazoline vulcanization accelerators.

In the rubber composition of the present invention, the amount of the additional vulcanization accelerator per 100 parts by mass of the rubber component (the total amount of the rubber component used in all steps) is not particularly limited, but is preferably 0.1 parts by mass or more, more preferably 1.0 part by mass or more. The amount is also preferably 5.0 parts by mass or less, more preferably 3.0 parts by mass or less.

The rubber composition (vulcanized rubber composition) of the present invention may be prepared by vulcanizing the unvulcanized rubber composition obtained through Step F in a conventional manner.

The method for preparing the rubber composition of the present invention provides a rubber composition having better abrasion resistance.

EXAMPLES

The present invention is specifically described with reference to examples, but the present invention is not limited thereto.

Synthesis Example 1 (Synthesis of particulate zinc carrier)

An amount of 91.5 g of zinc oxide was added to 847 mL of a 5.5% by mass aqueous suspension of calcined clay, and they were sufficiently stirred. To the mixture were added 330 g of a 10% by mass aqueous solution of sodium carbonate and 340 g of a 10% by mass aqueous solution of zinc chloride, followed by stirring. Subsequently, 30% by mass carbon dioxide gas was injected into the resulting mixture until the pH reached 7 or lower so that basic zinc carbonate was precipitated on the surface of calcined clay to synthesize a particulate zinc carrier. The synthesized product was then subjected to dehydration, drying, and pulverization steps to obtain powder. Thus, the particulate zinc carrier was prepared.

The particulate zinc carrier had a BET specific surface area of 50 $m^2/g$. In the particulate zinc carrier, the calcined clay supported the basic zinc carbonate in an amount of 45% by mass, calculated as metallic zinc. The supported basic zinc carbonate thus had a BET specific surface area of 60 $m^2/g$.

The chemicals used in Production Example 1 are listed below.

Styrene: a product of Kanto Chemical Co., Inc.
Butadiene: 1,3-butadiene available from Tokyo Chemical Industry Co., Ltd.
TMEDA: tetramethylethylenediamine available from Kanto Chemical Co., Inc.
n-Butyllithium solution: a 1.6 M solution of n-butyllithium in hexane available from Kanto Chemical Co., Inc.
2,6-Di-tert-butyl-p-cresol: NOCRAC 200 available from Ouchi Shinko Chemical Industrial Co., Ltd.
N,N-dimethylaminopropyl acrylamide: a product of Tokyo Chemical Industry Co., Ltd.

(Production Example 1)

<Preparation of modifier 1>

A 100 mL measuring flask in a nitrogen atmosphere was charged with 6.54 g of N,N-dimethylaminopropyl acrylamide and then with anhydrous hexane to give a total amount of 100 mL, whereby modifier 1 was prepared.

<Production of copolymer>

A sufficiently nitrogen-purged 30 L pressure-resistant vessel was charged with 18 L of n-hexane, 600 g of styrene, 1,400 g of butadiene, and 10 mmol of TMEDA, and then the temperature was raised to 40°C. Next, 11 mL of the n-butyllithium solution was added to the mixture, and then the temperature was raised to 50°C, followed by stirring for three hours. To the resulting mixture was added 14 mL of modifier 1, followed by stirring for 30 minutes. Subsequently, 1 mL of methanol and 0.1 g of 2,6-di-tert-butyl-p-cresol were added to the reaction solution, and then aggregates were collected from the polymer solution by steam stripping. The aggregates were dried under reduced pressure for 24 hours to obtain a copolymer. The copolymer had a styrene content of 30% by mass and a Mw of 248,000.

The chemicals used in examples and comparative examples are listed below.

NR: TSR20 (natural rubber)
BR 1: Ubepol BR150B (cis content: 97% by mass) available from Ube Industries, Ltd.
BR 2 : BR1250H (tin-modified BR, polymerized using lithium initiator, cis content: 45% by mass, vinyl content: 10 to 13% by mass, Mw/Mn: 1.5, tin atom content: 250 ppm) available from Zeon Corporation
ESBR: Nipol 1502 (emulsion-polymerized styrene-butadiene rubber (E-SBR), styrene content: 23.5% by mass) available from Zeon Corporation
Modified SBR: the copolymer prepared in Production Example 1
Carbon black: Seast 9H ($N_2SA$: 142 $m^2/g$, DBP oil absorption: 130 mL/100 g) available from Tokai Carbon Co., Ltd.
Silica: Ultrasil VN3 ($N_2SA$: 175 $m^2/g$) available from Degussa

Silane coupling agent: Si69 (bis(3-triethoxysilylpropyl)tetrasulfide) available from Degussa

Resin 1: NOVARES C10 (liquid coumarone-indene resin, softening point: 5 to 15°C) available from Rutgers Chemicals

Resin 2: NOVARES C30 (liquid coumarone-indene resin, softening point: 20 to 30°C) available from Rutgers Chemicals

Zinc oxide: zinc oxide available from Mitsui Mining & Smelting Co., Ltd.

Particulate zinc carrier: the particulate zinc carrier prepared in Synthesis Example 1

Antioxidant 1: OZONONE 6C (N-(1,3-dimethylbutyl)-N'-phenyl-p-phenylenediamine) available from Seiko Chemical Co., Ltd.

Antioxidant 2: NOCRAC 224 (2,2,4-trimethyl-1, 2-dihydroquinoline polymer) available from Ouchi Shinko Chemical Industrial Co., Ltd.

Wax: SUNNOC wax available from Ouchi Shinko Chemical Industrial Co., Ltd.

Oil: Diana Process AH-24 available from Idemitsu Kosan Co., Ltd.

Stearic acid: stearic acid "TSUBAKI" available from NOF Corporation

Sulfur: powdered sulfur (oil content: 5%) available from Tsurumi Chemical Industry Co., Ltd.

Vulcanization accelerator 1: NOCCELER NS (N-tert-butyl-2-benzothiazolylsulfenamide) available from Ouchi Shinko Chemical Industrial Co., Ltd.

Vulcanization accelerator 2: NOCCELER D (DPG, 1,3-diphenylguanidine) available from Ouchi Shinko Chemical Industrial Co., Ltd.

Vulcanization accelerator 3: NOCCELER CZ (CBS, N-cyclohexyl-2-benzothiazolylsulfenamide) available from Ouchi Shinko Chemical Industrial Co., Ltd.

Vulcanization accelerator 4: NOCCELER M-P (MBT, 2-mercaptobenzothiazole) available from Ouchi Shinko Chemical Industrial Co., Ltd.

Vulcanization accelerator 5: Rhenogran CLD80 (caprolactam disulfide) available from Rheine Chemie Additives

<Examples and Comparative Examples>

According to each of the formulations indicated in Tables 1 and 2, the chemicals other than the sulfur and vulcanization accelerators were kneaded in a Banbury mixer at a discharge temperature of 150 °C for four minutes to give a kneaded mixture. The kneaded mixture was then kneaded with the sulfur and vulcanization accelerator(s) at 80°C for three minutes using an open roll mill to obtain an unvulcanized rubber composition. Then, the unvulcanized rubber composition was press-vulcanized at 170°C for 12 minutes to obtain a vulcanized rubber composition.

According to each of the formulations indicated in Table 3, the chemicals other than the sulfur, vulcanization accelerators, and particulate zinc carrier were kneaded in a Banbury mixer at a discharge temperature of 150°C for four minutes to give a kneaded mixture. The kneaded mixture was then kneaded with the sulfur, vulcanization accelerators, and particulate zinc carrier at 80°C for three minutes using an open roll mill to obtain an unvulcanized rubber composition. Then, the unvulcanized rubber composition was press-vulcanized at 170°C for 12 minutes to obtain a vulcanized rubber composition.

According to each of the formulations indicated in Tables 4 to 6, the chemicals listed in the Step X1 section were kneaded in a 1.7 L Banbury mixer at a discharge temperature of 80°C for five minutes (Step X1). Subsequently, the kneaded mixture obtained in Step X1 and the chemicals listed in the Step X2 section were kneaded in a 1.7 L Banbury mixer at a discharge temperature of 140°C for three minutes (Step X2). Then, the kneaded mixture obtained in Step X2 and the chemicals listed in the Step F section were kneaded at about 80°C for three minutes using an open roll mill to obtain an unvulcanized rubber composition. Then, the unvulcanized rubber composition was press-vulcanized at 170°C for 12 minutes to obtain a vulcanized rubber composition.

The vulcanized rubber compositions prepared as above were evaluated as follows. Tables 1 to 6 show the results. In Table 1, Comparative Example 1-1 is taken as a reference comparative example; in Table 2, Comparative Example 2-1 is taken as a reference comparative example; in Table 3, Comparative Example 3-1 is taken as a reference comparative example; in Table 4, Comparative Example 4-1 is taken as a reference comparative example; in Table 5, Comparative Example 5-1 is taken as a reference comparative example; and in Table 6, Comparative Example 6-1 is taken as a reference comparative example.

(Curelasto measurement)

The measurement was performed in accordance with JIS K 6300-2:2000, and the time required to reach 5% (t5) or 95% (t95) of the maximum torque value was read. Then, the time difference "t95 - t5" of each formulation example was expressed as an index, with the reference comparative example set equal to 100. A higher index indicates a shorter cure time and better properties.

17

(Measurement of free sulfur content)

An amount of 0.2 g of the rubber vulcanizate was subjected to immersion extraction with 2 mL of tetrahydrofuran (THF, Wako Pure Chemical Industries, Ltd., stabilizer-free grade) at room temperature (25°C) to obtain an extraction liquid. The extraction liquid was diluted with THF as needed, and the sulfur content of the liquid was determined by high performance liquid chromatography (HPLC). The quantitative determination was carried out using a previously prepared calibration curve. (HPLC measurement conditions)

Column: Shodex KF-804L (two in series) available from Showa Denko K.K.
Eluent: tetrahydrofuran (THF available from Wako Pure Chemical Industries, Ltd., stabilizer-free grade)
Flow rate: 1 mL/min
Column temperature: 40°C
Detector: UV detector (detection wavelength: 264 nm)

(Measurement of zinc content)

The rubber vulcanizate was dry ashed through sulfuric acid digestion, and the ash was subjected to alkali fusion using sodium carbonate, followed by measuring the zinc content in the rubber vulcanizate using an ICP emission analyzer (P-4010, Hitachi, Ltd.). Here, the zinc content in the rubber vulcanizate can be calculated from the weight of the ash and the zinc content in the ash.

(Abrasion resistance index)

The Lambourn abrasion loss of the vulcanized rubber composition was determined using a Lambourn abrasion tester at a temperature of 20°C, a slip ratio of 20%, and a test time of two minutes. Then, a volume loss was calculated from the Lambourn abrasion loss. The volume loss of each formulation example is expressed as an index (Lambourn abrasion index), with the reference comparative example set equal to 100. A higher index indicates better abrasion resistance.

[Table 1]

| | | Comparative Example 1-1 | Example 1-1 | Example 1-2 | Example 1-3 | Example 1-4 |
|---|---|---|---|---|---|---|
| Formulation (parts by mass) | NR | 80 | 80 | 80 | 80 | 80 |
| | BR 2 | 20 | 20 | 20 | 20 | 20 |
| | Carbon black | 45 | 45 | 45 | 45 | 45 |
| | Wax | 1.5 | 1.5 | 1.5 | 1.5 | 1.5 |
| | Antioxidant 1 | 3 | 3 | 3 | 3 | 3 |
| | Antioxidant 2 | 1 | 1 | 1 | 1 | 1 |
| | Stearic acid | 3.0 | 2.0 | 2.0 | 2.0 | 2.0 |
| | Zinc oxide | 2.0 | | | | |
| | Particulate zinc carrier | | 0.8 | 1.6 | 0.8 | 1.6 |
| | Sulfur | 1.5 | 1.5 | 1.5 | 1.0 | 1.0 |
| | Vulcanization accelerator 1 | 2.0 | 2.0 | 2.0 | 2.0 | 2.0 |
| Evaluation results | t95-t5 | 100 | 158 | 150 | 135 | 128 |
| | Free sulfur content (% by mass) | 0.37 | 0.38 | 0.33 | 0.25 | 0.22 |
| | Zinc content (% by mass) | 1.10 | 0.25 | 0.49 | 0.25 | 0.49 |
| | Abrasion resistance | 100 | 106 | 105 | 109 | 107 |

[Table 2]

| | | Comparative Example 2-1 | Example 2-1 | Example 2-2 | Example 2-3 | Example 2-4 | Comparative Example 2-2 |
|---|---|---|---|---|---|---|---|
| Formulation (parts by mass) | NR | 70 | 70 | 70 | 70 | 70 | 70 |
| | ESBR | 30 | 30 | 30 | 30 | 30 | 30 |
| | Silica | 60 | 60 | 60 | 60 | 60 | 60 |
| | Silane coupling agent | 4.2 | 4.2 | 4.2 | 4.2 | 4.2 | 4.2 |
| | Wax | 1.5 | 1.5 | 1.5 | 1.5 | 1.5 | 1.5 |
| | Antioxidant 1 | 3 | 3 | 3 | 3 | 3 | 3 |
| | Antioxidant 2 | 1 | 1 | 1 | 1 | 1 | 1 |
| | Stearic acid | 3.0 | 2.0 | 2.0 | 2.0 | 2.0 | 3.0 |
| | Zinc oxide | 2.0 | | | | | 0.8 |
| | Particulate zinc carrier | | 0.8 | 1.6 | 0.8 | 1.6 | |
| | Sulfur | 1.5 | 1.5 | 1.5 | 1.0 | 1.0 | 1.5 |
| | Vulcanization accelerator 1 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 |
| Evaluation results | t95−t5 | 100 | 158 | 150 | 135 | 128 | 96 |
| | Free sulfur content (% by mass) | 0.42 | 0.43 | 0.38 | 0.28 | 0.25 | 0.48 |
| | Zinc content (% by mass) | 0.98 | 0.22 | 0.43 | 0.22 | 0.44 | 0.39 |
| | Abrasion resistance | 100 | 110 | 108 | 112 | 111 | 102 |

[Table 3]

| | | Comparative Example 3-1 | Example 3-1 | Example 3-2 | Example 3-3 | Example 3-4 | Example 3-5 | Comparative Example 3-2 |
|---|---|---|---|---|---|---|---|---|
| Formulation (parts by mass) | Modified SBR | 70 | 70 | 70 | 70 | 70 | 70 | 70 |
| | BR 1 | 30 | 30 | 30 | 30 | 30 | 30 | 30 |
| | Silica | 60 | 60 | 60 | 60 | 60 | 60 | 60 |
| | Silane coupling agent | 4.2 | 4.2 | 4.2 | 4.2 | 4.2 | 4.2 | 4.2 |
| | Oil | 15 | 5 | 5 | 5 | 5 | 5 | 15 |
| | Wax | 1.5 | 1.5 | 1.5 | 1.5 | 1.5 | 1.5 | 1.5 |
| | Antioxidant 1 | 3 | 3 | 3 | 3 | 3 | 3 | 3 |
| | Stearic acid | 3.0 | 2.0 | 2.0 | 2.0 | 2.0 | 2.0 | 3.0 |
| | Zinc oxide | 2.0 | | | | | | 0.8 |
| | Particulate zinc carrier | | 0.8 | 1.6 | 0.8 | 1.6 | 0.5 | |
| | Sulfur | 1.5 | 1.5 | 1.5 | 1.0 | 1.0 | 1.5 | 1.5 |
| | Vulcanization accelerator 1 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 |
| | Resin 1 | 10 | 10 | 10 | 10 | 10 | | 10 |
| | Resin 2 | | | | | | 10 | |
| Evaluation results | t95−t5 | 100 | 134 | 128 | 115 | 109 | 111 | 92 |
| | Free sulfur content (% by mass) | 0.42 | 0.43 | 0.38 | 0.28 | 0.25 | 0.43 | 0.48 |
| | Zinc content (% by mass) | 0.86 | 0.20 | 0.40 | 0.20 | 0.40 | 0.13 | 0.35 |
| | Abrasion resistance | 100 | 115 | 112 | 117 | 115 | 108 | 101 |

[Table 4]

| | | | | Comparative Example 4-1 | Comparative Example 4-2 | Example 4-1 | Comparative Example 4-3 |
|---|---|---|---|---|---|---|---|
| Formulation (parts by mass) | Step X | | | | | | |
| | | X1 | Modified SBR | 80 | 80 | 80 | 80 |
| | | | BR 1 | 20 | 20 | 20 | 20 |
| | | | Vulcanization accelerator 1 | | 2.0 | 2.0 | |
| | | | | | | | |
| | | | Kneading temperature [°C] | 80 | 80 | 80 | 80 |
| | | X2 | Silica | 60 | 60 | 60 | 60 |
| | | | Silane coupling agent | 4.8 | 4.8 | 4.8 | 4.8 |
| | | | Carbon black | 5 | 5 | 5 | 5 |
| | | | Oil | 15 | 15 | 15 | 15 |
| | | | Zinc oxide | 2.0 | 2.0 | | 0.8 |
| | | | Particulate zinc carrier | | | 0.8 | |
| | | | Stearic acid | 3.0 | 3.0 | 3.0 | 3.0 |
| | | | Antioxidant 1 | 3 | 3 | 3 | 3 |
| | | | | | | | |
| | | | Kneading temperature [°C] | 140 | 140 | 140 | 140 |
| | Step F | | Sulfur | 1.5 | 1.5 | 1.5 | 1.5 |
| | | | Vulcanization accelerator 1 | 2.0 | | | 2.0 |
| | | | Vulcanization accelerator 2 | 2.0 | 2.0 | 2.0 | 2.0 |
| | | | | | | | |
| | | | Kneading temperature [°C] | 80 | 80 | 80 | 80 |
| | | | | | | | |
| Evaluation results | | | t95-t5 | 100 | 49 | 106 | 94 |
| | | | Free sulfur content (% by mass) | 0.42 | 0.41 | 0.42 | 0.48 |
| | | | Zinc content (% by mass) | 0.89 | 0.89 | 0.19 | 0.36 |
| | | | Abrasion resistance | 100 | 112 | 120 | 99 |

[Table 5]

| | | | | Comparative Example 5-1 | Comparative Example 5-2 | Example 5-1 | Comparative Example 5-3 |
|---|---|---|---|---|---|---|---|
| Formulation (parts by mass) | | Step X | | | | | |
| | X 1 | | Modified SBR | 80 | 80 | 80 | 80 |
| | | | BR 1 | 20 | 20 | 20 | 20 |
| | | | Vulcanization accelerator 3 | | 2.0 | 2.0 | |
| | | | Vulcanization accelerator 5 | | 1.6 | 1.6 | |
| | | | Kneading temperature [°C] | 80 | 80 | 80 | 80 |
| | X 2 | | Silica | 60 | 60 | 60 | 60 |
| | | | Silane coupling agent | 4.8 | 4.8 | 4.8 | 4.8 |
| | | | Carbon black | 5 | 5 | 5 | 5 |
| | | | Oil | 15 | 15 | 15 | 15 |
| | | | Zinc oxide | 2.0 | 2.0 | | 0.8 |
| | | | Particulate zinc carrier | | | 0.8 | |
| | | | Stearic acid | 3.0 | 3.0 | 3.0 | 3.0 |
| | | | Antioxidant 1 | 3 | 3 | 3 | 3 |
| | | | | | | | |
| | | | Kneading temperature [°C] | 140 | 140 | 140 | 140 |
| | Step F | | Sulfur | 1.5 | 1.5 | 1.5 | 1.5 |
| | | | Vulcanization accelerator 3 | 2.0 | | | 2.0 |
| | | | Vulcanization accelerator 5 | 1.6 | | | 1.6 |
| | | | | | | | |
| | | | Kneading temperature [°C] | 80 | 80 | 80 | 80 |
| | | | | | | | |
| Evaluation results | | | t95-t5 | 100 | 57 | 107 | 98 |
| | | | Free sulfur content (% by mass) | 0.41 | 0.40 | 0.41 | 0.47 |
| | | | Zinc content (% by mass) | 0.89 | 0.90 | 0.21 | 0.36 |
| | | | Abrasion resistance | 100 | 115 | 124 | 100 |

[Table 6]

| | | | | Comparative Example 6-1 | Comparative Example 6-2 | Example 6-1 | Comparative Example 6-3 |
|---|---|---|---|---|---|---|---|
| Formulation (parts by mass) | Step X | | | | | | |
| | | X1 | Modified SBR | 80 | 80 | 80 | 80 |
| | | | BR 1 | 20 | 20 | 20 | 20 |
| | | | Vulcanization accelerator 4 | | 2.0 | 2.0 | |
| | | | | | | | |
| | | | Kneading temperature [℃] | 80 | 80 | 80 | 80 |
| | | X2 | Silica | 60 | 60 | 60 | 60 |
| | | | Silane coupling agent | 4.8 | 4.8 | 4.8 | 4.8 |
| | | | Carbon black | 5 | 5 | 5 | 5 |
| | | | Oil | 15 | 15 | 15 | 15 |
| | | | Zinc oxide | 2.0 | 2.0 | | 0.8 |
| | | | Particulate zinc carrier | | | 0.8 | |
| | | | Stearic acid | 3.0 | 3.0 | 3.0 | 3.0 |
| | | | Antioxidant 1 | 3 | 3 | 3 | 3 |
| | | | | | | | |
| | | | Kneading temperature [℃] | 140 | 140 | 140 | 140 |
| | Step F | | Sulfur | 1.5 | 1.5 | 1.5 | 1.5 |
| | | | Vulcanization accelerator 4 | 2.0 | | | 2.0 |
| | | | | | | | |
| | | | | | | | |
| | | | Kneading temperature [℃] | 80 | 80 | 80 | 80 |
| | | | | | | | |
| Evaluation results | | | t95−t5 | 100 | 89 | 141 | 98 |
| | | | Free sulfur content (% by mass) | 0.49 | 0.47 | 0.44 | 0.57 |
| | | | Zinc content (% by mass) | 0.88 | 0.90 | 0.19 | 0.36 |
| | | | Abrasion resistance | 100 | 115 | 124 | 100 |

As shown in Tables 1 to 6, the rubber compositions of examples exhibited good abrasion resistance which contained a rubber component including a diene rubber, and a particulate zinc carrier including a silicate particle and finely divided zinc oxide or finely divided basic zinc carbonate supported on the surface of the silicate particle; moreover, they exhibited reduced cure time that allows for efficient production of the rubber compositions and therefore pneumatic tires formed therefrom.

It is also shown that the rubbers of the examples exhibited good abrasion resistance which had a free sulfur content of 0.46% by mass or less and a zinc content of 0.08 to 0.60% by mass.

The present invention provides a rubber composition having good abrasion resistance and a pneumatic tire formed from the rubber composition. Provided is a rubber composition containing: a rubber component including a diene rubber; and a particulate zinc carrier, the particulate zinc carrier including a silicate particle and finely divided zinc oxide or finely divided basic zinc carbonate supported on the surface of the silicate particle.

**Claims**

1. A rubber composition, comprising:

a rubber component including a diene rubber; and
a particulate zinc carrier,
the particulate zinc carrier comprising a silicate particle and finely divided zinc oxide or finely divided basic zinc carbonate supported on a surface of the silicate particle, wherein the finely divided zinc oxide-supporting silicate particle has a BET specific surface area within a range of 10 to 55 m$^2$/g, or the finely divided basic zinc carbonate-supporting silicate particle has a BET specific surface area within a range of 25 to 90 m$^2$/g, **characterized in that** the rubber composition is obtainable by kneading a rubber component before kneading with sulfur, with a sulfur atom-containing vulcanization accelerator, and then kneading the resulting mixture with sulfur.

2. The rubber composition according to claim 1,
wherein the rubber composition comprises 0.3 to 2.0 parts by mass of the particulate zinc carrier per 100 parts by mass of the rubber component.

3. The rubber composition according to claim 1 or 2,
wherein the diene rubber is at least one selected from styrenebutadiene rubber, polybutadiene rubber, or an isoprene-based rubber.

4. The rubber composition according to any one of claims 1 to 3,
wherein the rubber composition comprises sulfur and comprises 30 to 200 parts by mass of the particulate zinc carrier per 100 parts by mass of the sulfur.

5. The rubber composition according to any one of claims 1 to 4,
wherein the diene rubber is a diene rubber having a functional group interactive with a filler, wherein the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups, which functional groups may be substituted.

6. The rubber composition according to any one of claims 1 to 5,
wherein the rubber composition comprises 1 to 120 parts by mass of a silica having a nitrogen adsorption specific surface area of 40 to 400 m$^2$/g per 100 parts by mass of the rubber component.

7. The rubber composition according to any one of claims 1 to 6,
wherein the rubber composition comprises a resin.

8. The rubber composition according to claim 7,
wherein the resin has a softening point of -20 to 45°C, which is determined as set forth in JIS K 6220-1:2001.

9. The rubber composition according to any one of claims 1 to 8,
wherein the rubber composition comprises 3 to 120 parts by mass of a carbon black having a nitrogen adsorption specific surface area of 30 to 300 m$^2$/g per 100 parts by mass of the rubber component.

10. The rubber composition according to any one of claims 1 to 9,
wherein the rubber composition comprises 0.5 to 3.0 parts by mass of stearic acid per 100 parts by mass of the rubber component.

11. The rubber composition according to any one of claims 1 to 10,
wherein the rubber composition comprises a tin-modified polybutadiene rubber produced by polymerization using a lithium initiator and having a tin atom content of 50 to 3,000 ppm, a vinyl content of 5 to 50% by mass, and a molecular weight distribution (Mw/Mn) of 2.0 or less.

12. The rubber composition according to any one of claims 1 to 10,
wherein the rubber composition comprises an isoprene-based rubber and a high cis polybutadiene rubber having a cis content of 90% by mass or more.

13. The rubber composition according to any one of claims 1 to 12, which is a rubber composition for tires.

14. A pneumatic tire, comprising a tire component formed from the rubber composition according to any one of claims 1 to 13.

15. A method for preparing the rubber composition according to any one of claims 1 to 13, the method comprising kneading a rubber component, before being kneaded with sulfur, with a sulfur atom-containing vulcanization accelerator, and then kneading the resulting kneaded mixture with the sulfur.

16. The method for preparing the rubber composition according to claim 15,
wherein the method comprises kneading the rubber component, before being kneaded with a filler, with the sulfur atom-containing vulcanization accelerator, and then kneading the resulting kneaded mixture with the filler at a kneading temperature of 120°C or higher.

17. A rubber vulcanizate obtainable by vulcanizing the rubber composition according to any one of claims 1 to 12, having a free sulfur content of 0.46% by mass or less and a zinc content of 0.08 to 0.60% by mass, wherein the free sulfur content in the rubber vulcanizate is determined by subjecting a rubber sample to immersion extraction with tetrahydrofuran, and optionally diluting the extraction liquid with tetrahydrofuran, followed by quantitation by high performance liquid chromatography, and wherein the zinc content is measured by dry ashing the rubber vulcanizate through sulfuric acid digestion, and subjecting the ash to alkali fusion using sodium carbonate, followed by measuring the zinc content in the rubber vulcanizate using an ICP emission analyzer, and the zinc content in the rubber vulcanizate is calculated from the weight of the ash and the zinc content in the ash.

18. The rubber vulcanizate according to claim 17,
wherein the free sulfur content is 0.44% by mass or less, and the zinc content is 0.10 to 0.55% by mass.

19. The rubber vulcanizate according to claim 18,
wherein the zinc content is 0.12 to 0.50% by mass.

20. The rubber vulcanizate according to any one of claims 17 to 19, which is for use in tires.

## Patentansprüche

1. Kautschukzusammensetzung, umfassend:

eine Kautschukkomponente, die einen Dienkautschuk enthält; und
einen teilchenförmigen Zink-Träger,
wobei der teilchenförmige Zink-Träger ein Silikat-Teilchen und feinverteiltes Zinkoxid oder feinverteiltes basisches Zinkcarbonat, das auf einer Oberfläche des Silikat-Teilchens getragen wird, umfasst, wobei das feinverteilte Zinkoxid-tragende Silikat-Teilchen eine BET-spezifische Oberfläche innerhalb eines Bereichs von 10 bis 55 m$^2$/g aufweist oder das feinverteilte basische Zinkcarbonat-tragende Silikat-Teilchen eine BET-spezifische Oberfläche innerhalb eines Bereichs von 25 bis 90 m$^2$/g aufweist, **dadurch gekennzeichnet, dass** die Kautschukzusammensetzung durch Kneten einer Kautschukkomponente mit einem schwefelatomhaltigen Vulkanisationsbeschleuniger vor dem Kneten mit Schwefel und anschließendem Kneten der resultierenden Mischung mit Schwefel erhältlich ist.

2. Kautschukzusammensetzung nach Anspruch 1,
wobei die Kautschukzusammensetzung 0,3 bis 2,0 Massenteile des teilchenförmigen Zinkträgers pro 100 Massenteile der Kautschukkomponente umfasst.

3. Kautschukzusammensetzung nach Anspruch 1 oder 2,
wobei der Dien-Kautschuk mindestens einer ausgewählt aus StyrolButadien-Kautschuk, Polybutadien-Kautschuk oder einem Kautschuk auf Isopren-Basis ist.

4. Kautschukzusammensetzung nach einem der Ansprüche 1 bis 3,
wobei die Kautschukzusammensetzung Schwefel enthält und 30 bis 200 Massenteile des teilchenförmigen Zink-Trägers pro 100 Massenteile des Schwefels umfasst.

5. Kautschukzusammensetzung nach einem der Ansprüche 1 bis 4,
wobei der Dienkautschuk ein Dienkautschuk mit einer funktionellen Gruppe ist, die mit einem Füllstoff interagiert, wobei die funktionelle Gruppe Amino-, Amid-, Silyl-, Alkoxysilyl-, Isocyanat-, Imino-, Imidazol-, Harnstoff-, Ether-, Carbonyl-, Oxycarbonyl-, Mercapto-, Sulfid-, Disulfid-, Sulfonyl-, Sulfinyl-, Thiocarbonyl-, Ammonium-, Imid-, Hydrazo-, Azo-, Diazo-, Carboxyl-, Nitril-, Pyridyl-, Alkoxy-, Hydroxyl-, Oxy- und Epoxygruppen beinhaltet, wobei die funktionellen Gruppen substituiert sein können.

6. Kautschukzusammensetzung nach einem der Ansprüche 1 bis 5,
wobei die Kautschukzusammensetzung 1 bis 120 Massenteile eines Siliciumdioxids mit einer spezifischen Oberfläche für die Stickstoffadsorption von 40 bis 400 m$^2$/g pro 100 Massenteile der Kautschukkomponente umfasst.

7. Kautschukzusammensetzung nach einem der Ansprüche 1 bis 6,
wobei die Kautschukzusammensetzung ein Harz umfasst.

8. Kautschukzusammensetzung nach Anspruch 7,
wobei das Harz einen Erweichungspunkt von -20 bis 45°C aufweist, der wie in JIS K 6220-1:2001 festgelegt bestimmt wird.

9. Kautschukzusammensetzung nach einem der Ansprüche 1 bis 8,
wobei die Kautschukzusammensetzung 3 bis 120 Massenteile eines Rußes mit einer spezifischen Stickstoffadsorptionsoberfläche von 30 bis 300 m$^2$/g pro 100 Massenteile der Kautschukkomponente umfasst.

10. Kautschukzusammensetzung nach einem der Ansprüche 1 bis 9,
wobei die Kautschukzusammensetzung 0,5 bis 3,0 Massenteile Stearinsäure pro 100 Massenteile der Kautschukkomponente umfasst.

11. Kautschukzusammensetzung nach einem der Ansprüche 1 bis 10,
wobei die Kautschukzusammensetzung einen zinnmodifizierten Polybutadienkautschuk umfasst, der durch Polymerisation unter Verwendung eines Lithiuminitiators hergestellt wurde und einen Zinnatomgehalt von 50 bis 3000 ppm, einen Vinylgehalt von 5 bis 50 Massenprozent und eine Molekulargewichtsverteilung (Mw/Mn) von 2,0 oder weniger aufweist.

12. Kautschukzusammensetzung nach einem der Ansprüche 1 bis 10,
wobei die Kautschukzusammensetzung einen Kautschuk auf Isoprenbasis und einen Polybutadienkautschuk mit hohem cis-Gehalt mit einem cis-Gehalt von 90 Massen-% oder mehr umfasst.

13. Kautschukzusammensetzung nach einem der Ansprüche 1 bis 12, die eine Kautschukzusammensetzung für Reifen ist.

14. Luftreifen, umfassend eine Reifenkomponente, die aus der Kautschukzusammensetzung nach einem der Ansprüche 1 bis 13 gebildet ist.

15. Verfahren zur Herstellung der Kautschukzusammensetzung nach einem der Ansprüche 1 bis 13, wobei das Verfahren das Kneten einer Kautschukkomponente, bevor sie mit Schwefel geknetet wird, mit einem schwefelatomhaltigen Vulkanisationsbeschleuniger und das anschließende Kneten der resultierenden gekneteten Mischung mit dem Schwefel umfasst.

16. Verfahren zur Herstellung der Kautschukzusammensetzung nach Anspruch 15,
wobei das Verfahren das Kneten der Kautschukkomponente, bevor sie mit einem Füllstoff geknetet wird, mit dem schwefelatomhaltigen Vulkanisationsbeschleuniger und dann das Kneten der resultierenden gekneteten Mischung mit dem Füllstoff bei einer Knettemperatur von 120°C oder höher umfasst

17. Kautschukvulkanisat, erhältlich durch Vulkanisieren der Kautschukzusammensetzung nach einem der Ansprüche 1 bis 12, mit einem Gehalt an freiem Schwefel von 0,46 Massen-% oder weniger und einem Zinkgehalt von 0,08 bis 0,60 Massen-%, wobei der Gehalt an freiem Schwefel in dem Kautschukvulkanisat bestimmt wird, indem eine Kautschukprobe einer Eintauchextraktion mit Tetrahydrofuran unterzogen wird und gegebenenfalls die Extraktionsflüssigkeit mit Tetrahydrofuran verdünnt wird, gefolgt von einer Quantifizierung durch Hochleistungsflüssigkeitschromatographie, und wobei der Zinkgehalt gemessen wird, indem das Kautschukvulkanisat durch Schwefelsäureaufschluss trocken verascht wird und die Asche einer Alkalischmelze unter Verwendung von Natriumcarbonat unterzogen wird, gefolgt von der Messung des Zinkgehalts in dem Kautschukvulkanisat unter Verwendung eines ICP-Emissionsanalysators, und der Zinkgehalt in dem Kautschukvulkanisat aus dem Gewicht der Asche und dem Zinkgehalt in der Asche berechnet wird.

18. Kautschukvulkanisat nach Anspruch 17,
wobei der Gehalt an freiem Schwefel 0,44 Massen-% oder weniger ist und der Zinkgehalt 0,10 bis 0,55 Massen-% ist.

**19.** Kautschukvulkanisat nach Anspruch 18,
wobei der Zinkgehalt 0,12 bis 0,50 Massen-% ist.

**20.** Kautschukvulkanisat nach einem der Ansprüche 17 bis 19, zur Verwendung in Reifen.

**Revendications**

**1.** Composition de caoutchouc comprenant :

un composant caoutchouc contenant un caoutchouc de diène ; et
un support en zinc particulaire,
le support en zinc particulaire comprenant une particule de silicate et de l'oxyde de zinc finement divisé ou du carbonate de zinc basique finement divisé supporté sur une surface de la particule de silicate, laquelle particule de silicate supportant de l'oxyde de zinc finement divisé a une surface spécifique BET située dans la plage allant de 10 à 55 m$^2$/g, ou laquelle particule de silicate supportant du carbonate de zinc basique finement divisé a une surface spécifique BET située dans la plage allant de 25 à 90 m$^2$/g,
**caractérisée en ce que** la composition de caoutchouc peut être obtenue par malaxage d'un composant caoutchouc avant malaxage avec du soufre, avec un accélérateur de vulcanisation contenant un atome de soufre, et ensuite malaxage du mélange résultant avec du soufre.

**2.** Composition selon la revendication 1, laquelle composition de caoutchouc comprend 0,3 à 2,0 parties en masse du support en zinc particulaire pour 100 parties en masse du composant caoutchouc.

**3.** Composition selon la revendication 1 ou 2, dans laquelle le caoutchouc de diène est au moins l'un choisi parmi un caoutchouc de styrène-butadiène, un caoutchouc de polybutadiène, et un caoutchouc à base d'isoprène.

**4.** Composition de caoutchouc selon l'une quelconque des revendications 1 à 3, laquelle composition de caoutchouc comprend du soufre et comprend 30 à 200 parties en masse du support en zinc particulaire pour 100 parties en masse du soufre.

**5.** Composition de caoutchouc selon l'une quelconque des revendications 1 à 4, dans laquelle le caoutchouc de diène est un caoutchouc de diène ayant un groupe fonctionnel interactif avec une charge, dans laquelle le groupe fonctionnel englobe les groupes amino, amide, silyle, alcoxysilyle, isocyanate, imino, imidazole, urée, éther, carbonyle, oxycarbonyle, mercapto, sulfure, disulfure, sulfonyle, sulfinyle, thiocarbonyle, ammonium, imide, hydrazo, azo, diazo, carboxyle, nitrile, pyridyle, alcoxy, hydroxyle, oxy, et époxy, lesquels groupes fonctionnels peuvent être substitués.

**6.** Composition de caoutchouc selon l'une quelconque des revendications 1 à 5, laquelle composition de caoutchouc comprend 1 à 120 parties en masse d'une silice ayant une surface spécifique par adsorption d'azote de 40 à 400 m$^2$/g pour 100 parties en masse du composant caoutchouc.

**7.** Composition de caoutchouc selon l'une quelconque des revendications 1 à 6, laquelle composition de caoutchouc comprend une résine.

**8.** Composition de caoutchouc selon la revendication 7, dans laquelle la résine a un point de ramollissement de -20 à 45°C, qui est déterminé comme stipulé dans la norme JIS K 6220-1:2001.

**9.** Composition de caoutchouc selon l'une quelconque des revendications 1 à 8, laquelle composition de caoutchouc comprend 3 à 120 parties en masse d'un noir de carbone ayant une surface spécifique par adsorption d'azote de 30 à 300 m$^2$/g pour 100 parties en masse du composant caoutchouc.

**10.** Composition de caoutchouc selon l'une quelconque des revendications 1 à 9, laquelle composition de caoutchouc comprend 0,5 à 3,0 parties en masse d'acide stéarique pour 100 parties en masse du composant caoutchouc.

**11.** Composition de caoutchouc selon l'une quelconque des revendications 1 à 10, laquelle composition de caoutchouc comprend un caoutchouc de polybutadiène modifié par de l'étain produit par polymérisation utilisant un amorceur au lithium et ayant une teneur en atomes d'étain de 50 à 3 000 ppm, une teneur en vinyle de 5 à 50 % en masse, et une distribution des masses moléculaires (Mw/Mn) de 2,0 ou moins.

**12.** Composition de caoutchouc selon l'une quelconque des revendications 1 à 10, laquelle composition de caoutchouc comprend un caoutchouc à base d'isoprène et un caoutchouc de polybutadiène à forte teneur en cis, ayant une teneur en cis de 90 % en masse ou plus.

**13.** Composition de caoutchouc selon l'une quelconque des revendications 1 à 12, qui est une composition de caoutchouc pour pneus.

**14.** Pneu comprenant un composant de pneu formé à partir de la composition de caoutchouc de l'une quelconque des revendications 1 à 13.

**15.** Procédé pour préparer la composition de caoutchouc de l'une quelconque des revendications 1 à 13, le procédé comprenant le malaxage d'un composant caoutchouc, avant malaxage avec du soufre, avec un accélérateur de vulcanisation contenant un atome de soufre, et ensuite le malaxage du mélange malaxé résultant avec le soufre.

**16.** Procédé pour préparer une composition de caoutchouc selon la revendication 15, lequel procédé comprend le malaxage du composant caoutchouc, avant malaxage avec une charge, avec l'accélérateur de vulcanisation contenant un atome de soufre, et ensuite le malaxage du mélange malaxé résultant avec la charge à une température de malaxage de 120 °C ou plus.

**17.** Vulcanisat de caoutchouc pouvant être obtenu par vulcanisation de la composition de caoutchouc de l'une quelconque des revendications 1 à 12, ayant une teneur en soufre libre de 0,46 % en masse ou moins et une teneur en zinc de 0,08 à 0,60 % en masse, dans lequel la teneur en soufre libre dans le vulcanisat de caoutchouc est déterminée par soumission d'un échantillon de caoutchouc à une extraction par immersion avec du tétrahydrofurane, et éventuellement dilution du liquide d'extraction avec du tétrahydrofurane, suivie d'une quantification par chromatographie liquide haute performance, et dans lequel la teneur en zinc est mesurée par incinération à sec du vulcanisat de caoutchouc par digestion à l'acide sulfurique, et soumission des cendres à une fusion alcaline utilisant du carbonate de sodium, suivie d'une mesure de la teneur en zinc dans le vulcanisat de caoutchouc par utilisation d'un analyseur d'émission ICP, et la teneur en zinc dans le vulcanisat de caoutchouc est calculée à partir du poids des cendres et de la teneur en zinc des cendres.

**18.** Vulcanisat de caoutchouc selon la revendication 17, dans lequel la teneur en soufre libre est de 0,44 % en masse ou moins, et la teneur en zinc est de 0,10 à 0,55 % en masse.

**19.** Vulcanisat de caoutchouc selon la revendication 18, dans lequel la teneur en zinc est de 0,12 à 0,50 % en masse.

**20.** Vulcanisat de caoutchouc selon l'une quelconque des revendications 17 à 19, qui est destiné à être utilisé dans des pneus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009079077 A
- US 2007072959 A1
- US 4331706 A
- US 4414370 A
- JP 59006207 A
- JP H558005 B
- JP H1313522 A
- US 5010166 A

**Non-patent literature cited in the description**

- annual research report TREND. Toagosei Co., Ltd, 2000, vol. 3, 42-45